# EUROPEAN PATENT APPLICATION

(11) **EP 2 336 693 A2**
(43) Date of publication of application: **22.06.2011**
(21) Application number: 10189912.8
(22) Date of filing: 05.12.2008
(51) Int. Cl.: F25J 1/00, F25J 1/02

(54) **Compressor system and method for gas liquefaction system**

(30) Priority: 07.12.2007 US 5701 P
(62) Divisional of application: 08857104.7
(71) Applicant: Dresser-Rand Company, Olean, NY 14760 (US)
(72) Inventor: Liskow, Kyle W, Sugar Land, TX 77478 (US); Frank, Kevin M, Tomball, TX 77375 (US); Bardon, Patrice C, Houston, TX 77077 (US)
(74) Representative: Giles, Ashley Simon

(57) **Abstract**

A method of performing maintenance on a gas liquefaction system, the method comprising: providing the gas liquefaction system comprising a compressor and an aeroderivative gas turbine coupled thereto, the aeroderivative gas turbine comprising a gas generator and a power turbine coupled thereto; decoupling the aeroderivative gas turbine from a remainder of the gas liquefaction system as a modular unit; performing maintenance on at least the aeroderivative gas turbine; and re-coupling the aeroderivative gas turbine to the remainder of the gas liquefaction system as a modular unit after decoupling the aeroderivative gas turbine from the remainder of the gas liquefaction system as a modular unit.

## Description

### Cross Reference To Related Application

This application claims the benefit of the filing date of U.S. provisional patent application number 61/005,701, filed December 7, 2007, the disclosure of which is incorporated herein by reference.

### Background

The present disclosure relates in general to compressor systems, and in particular to compressor systems for use with, for example, gas liquefaction systems, and including aeroderivative gas turbines.

### Summary

Embodiments of the disclosure may provide a system including a compressor system through which a refrigerant is adapted to flow, a compressor of the system including a first shaft; and an aeroderivative gas turbine for driving the compressor, the aeroderivative gas turbine including a gas generator; and a low speed power turbine coupled to the gas generator, the low speed power turbine including a second shaft directly coupled to the first shaft of the compressor for directly driving the first shaft; wherein the respective rotational speeds of the first and second shafts are substantially equal.

Embodiments of the disclosure may further provide a method including providing a compressor including a first shaft; providing an aeroderivative gas turbine including a power turbine including a second shaft; directly coupling the second shaft of the power turbine to the first shaft of the compressor; circulating a refrigerant through the compressor; and pressurizing the refrigerant with the compressor, including directly driving the compressor using the aeroderivative gas turbine, including rotating the first shaft of the power turbine at a first rotational speed; and rotating the second shaft of the compressor at a second rotational speed; wherein the first and second rotational speeds are substantially equal.

Embodiments of the disclosure may further provide a method including providing a gas liquefaction system including a compressor and an aeroderivative gas turbine coupled thereto, the aeroderivative gas turbine including a gas generator and a power turbine coupled thereto; decoupling the aeroderivative gas turbine from a remainder of the gas liquefaction system as a modular unit; performing maintenance on at least the aeroderivative gas turbine; and re-coupling the aeroderivative gas turbine to the remainder of the gas liquefaction system as a modular unit after decoupling the aeroderivative gas turbine from the remainder of the gas liquefaction system as a modular unit.

### Brief Description of the Drawings

The present disclosure is best understood from the following detailed description when read with the accompanying Figures. It is emphasized that, in accordance with the standard practice in the industry, various features are not drawn to scale. In fact, the dimensions of the various features may be arbitrarily increased or reduced for clarity of discussion.

Figure 1 illustrates a diagram of a system according to an exemplary embodiment, the system including a compressor, an aeroderivative gas turbine, a heat exchanger, a condenser, and an expansion element, such as an expansion valve, according to respective exemplary embodiments.

Figure 2 illustrates a partial diagrammatic/partial sectional view of the aeroderivative gas turbine and the compressor of Figure 1, according to respective exemplary embodiments.

Figure 3 illustrates a partial diagrammatic/partial sectional view of the aeroderivative gas turbine of Figures 1 and 2, according to an exemplary embodiment, the aeroderivative gas turbine including a gas generator and a power turbine, according to respective exemplary embodiments.

Figure 4 illustrates a partial diagrammatic/partial sectional view of the power turbine of Figure 3, according to an exemplary embodiment.

Figure 5 illustrates a partial diagrammatic/partial section view of the compressor of Figures 1 and 2, according to an exemplary embodiment.

Figure 6 illustrates a flow chart of a method of operating the system of Figure 1, according to an exemplary embodiment.

Figure 7 illustrates a flow chart of a step of the method of Figure 6, according to an exemplary embodiment.

Figure 8 illustrates a flow chart of a step of the step of Figure 7, according to an exemplary embodiment.

Figure 9 illustrates a flow chart of a step of the step of Figure 8, according to an exemplary embodiment.

Figure 10 illustrates a flow chart of a step of the step of Figure 9, according to an exemplary embodiment.

Figure 11 illustrates a flow chart of a step of the step of Figure 10, according to an exemplary embodiment.

Figure 12 illustrates a graph of exemplary calculations showing a comparison between the aeroderivative gas turbine of Figures 1-4 and another aeroderivative gas turbine, according to respective exemplary embodiments.

Figure 13A illustrates a flow chart of a method of performing maintenance on the gas liquefaction system of Figure 1, according to an exemplary embodiment.

Figure 13B illustrates a flow chart of a step of the method of Figure 13A, according to an exemplary embodiment.

Figure 13C illustrates a flow chart of a method of performing maintenance on the gas liquefaction system of Figure 1, according to an exemplary embodiment.

Figure 14 illustrates a graph of exemplary calculations showing a comparison between the aeroderivative gas turbine of Figures 1-4 and another aeroderivative gas turbine, according to respective exemplary embodiments.

Figure 15 illustrates a system according to an exemplary embodiment, the system including the compressor, the aeroderivative gas turbine, the heat exchanger, the condenser, and the expansion valve of Figure 1.

### Detailed Description

It is to be understood that the following disclosure describes several exemplary embodiments for implementing different features, structures, or functions of the invention. Exemplary embodiments of components, arrangements, and configurations are described below to simplify the present disclosure, however, these exemplary embodiments are provided merely as examples and are not intended to limit the scope of the invention. Additionally, the present disclosure may repeat reference numerals and/or letters in the various exemplary embodiments and across the Figures provided herein. This repetition is for the purpose of simplicity and clarity and does not in itself dictate a relationship between the various exemplary embodiments and/or configurations discussed in the various Figures. Moreover, the formation of a first feature over or on a second feature in the description that follows may include embodiments in which the first and second features are formed in direct contact, and may also include embodiments in which additional features may be formed interposing the first and second features, such that the first and second features may not be in direct contact. Finally, the exemplary embodiments presented below may be combined in any combination of ways, i.e., any element from one exemplary embodiment may be used in any other exemplary embodiment, without departing from the scope of the disclosure.

Additionally, certain terms are used throughout the following description and claims to refer to particular components. As one skilled in the art will appreciate, various entities may refer to the same component by different names, and as such, the naming convention for the elements described herein is not intended to limit the scope of the invention, unless otherwise specifically defined herein. Further, the naming convention used herein is not intended to distinguish between components that differ in name but not function. Further, in the following discussion and in the claims, the terms "including" and "comprising" are used in an open-ended fashion, and thus should be interpreted to mean "including, but not limited to." All numerical values in this disclosure may be exact or approximate values unless otherwise specifically stated. Accordingly, various embodiments of the disclosure may deviate from the numbers, values, and ranges disclosed herein without departing from the intended scope.

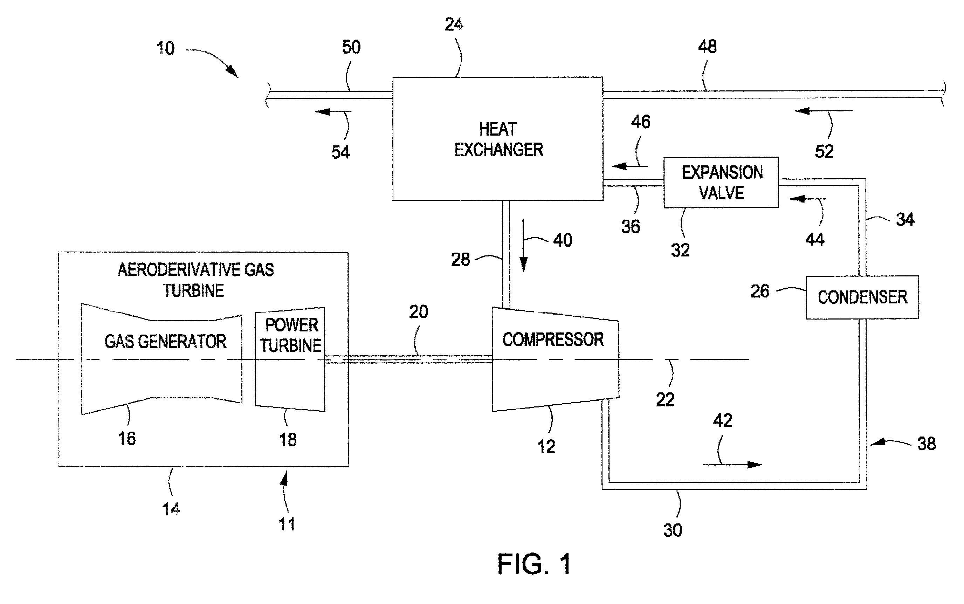

Figure 1 illustrates, in an exemplary embodiment, a gas liquefaction system, which is generally referred to by the reference numeral 10 and includes a compressor system 1 including a compressor 12 and an aeroderivative gas turbine 14 coupled thereto, the aeroderivative gas turbine 14 including a gas generator 16 and a power turbine 18 coupled thereto. The compressor 12 is directly coupled to the aeroderivative gas turbine 14 via a coupling 20. A center axis 22 is defined by the compressor 12, the aeroderivative gas turbine 14, and the direct coupling therebetween. The compressor 12 is fluidicly coupled between a heat exchanger 24 and a condenser 26 via lines 28 and 30, respectively. An expansion element, such as an expansion valve 32, is fluidicly coupled between the condenser 26 and the heat exchanger 24 via lines 34 and 36, respectively. The heat exchanger 24, the compressor 12, the condenser 26, the expansion valve 32, and the lines 28, 30, 34 and 36 together form, or are at least a part of, a loop 38, through which a refrigerant is adapted to circulate in a direction indicated by arrows 40, 42, 44 and 46, under conditions to be described below. In addition to being fluidicly coupled to the compressor 12 and the expansion valve 32 via the lines 28 and 36, respectively, the heat exchanger 24 is also fluidicly coupled between lines 48 and 50, via which a gas is adapted to enter and exit, respectively, the heat exchanger 24, as indicated by arrows 52 and 54. In several exemplary embodiments, one or more of the loop 38 and the lines 48 and 50 are, include, or are at least a part of, one or more cooling stages of the gas liquefaction system 10, under conditions to be described below. In several exemplary embodiments, instead of, or in addition to the expansion valve 32, another expansion element is fluidicly coupled between the condenser 26 and the heat exchanger 24 via the lines 34 and 36, respectively, such as, for example, a turbo expander, another type of expansion equipment, and/or any combination thereof.

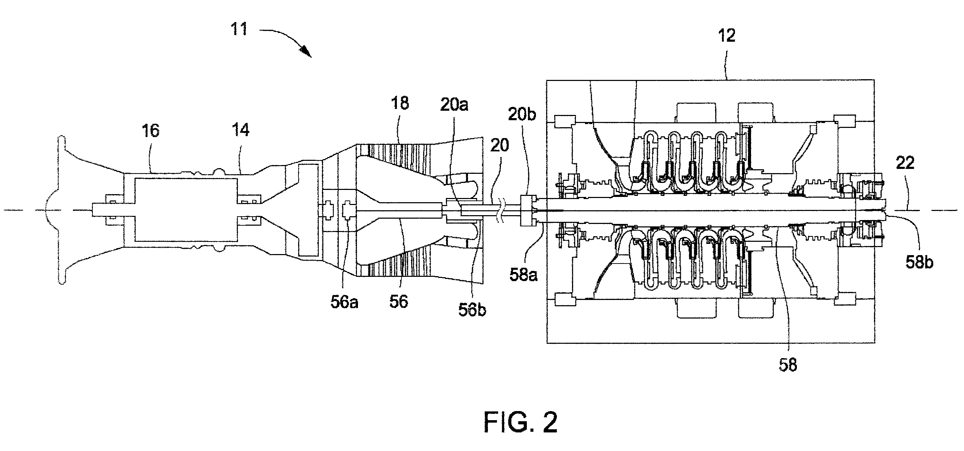

In an exemplary embodiment, as illustrated in Figure 2 with continuing reference to Figure 1, the power turbine 18 includes a rotatable drive shaft 56 having opposing end portions 56a and 56b, the compressor 12 includes a rotatable compressor shaft 58 having opposing end portions 58a and 58b, and the coupling 20 includes opposing end portions 20a and 20b. Each of the shafts 56 and 58 is generally axially aligned with the center axis 22. The end portion 20a of the coupling 20 is coupled to the end portion 56b of the shaft 56 of the power turbine 18, and the end portion 20b of the coupling 20 is coupled to the end portion of the 58a of the shaft 58 of the compressor 12. In an exemplary embodiment, the coupling 20 includes one or more couplings such as, for example, one or more spools. In an exemplary embodiment, the coupling 20 includes one or more couplings such as, for example, one or more spools, which are configured to directly couple the shaft 56 to the shaft 58 so that the shaft 56 directly drives the shaft 58, under conditions to be described below. In an exemplary embodiment, the coupling 20 is omitted and the end portion 56b of the shaft 56 is coupled to the end portion 58a of the shaft 58 so that the shaft 56 directly drives the shaft 58, under conditions to be described below, In several exemplary embodiments, in addition to, or instead of one or more couplings such as, for example, one or more spools, the coupling 20 includes one or more other types of devices and/or systems configured to directly couple the shaft 56 to the shaft 58 so that the shaft 56 directly drives the shaft 58.

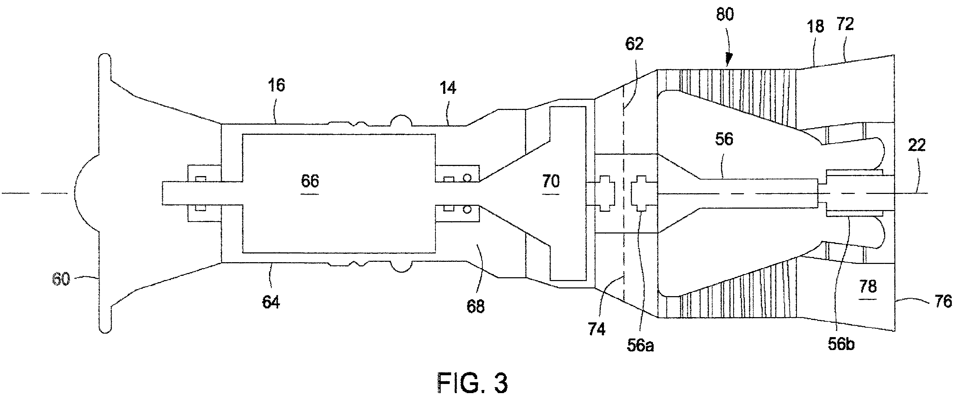

In an exemplary embodiment, as illustrated in Figure 3 with continuing reference to Figures 1 and 2, the gas generator 16 of the aeroderivative gas turbine 14 includes an inlet 60 and an outlet 62 fluidicly coupled thereto, and a housing 64. A compressor 66 is disposed in the housing 64 and is fluidicly coupled to the inlet 62. In an exemplary embodiment, the compressor 66 includes one or more axial compressors. A combustion chamber 68 including a combustor 70 is fluidicly coupled between the compressor 66 and the outlet 62. In several exemplary embodiments, the inlet 60 is fluidicly coupled to one or more lines, chutes, pipes, conduits or the like (not shown) via which air is adapted to be directed to the inlet 60, under conditions to be described below.

The power turbine 18 of the aeroderivative gas turbine 14 includes a casing 72, an intake 74 fluidicly coupled to the outlet 62 of the gas generator 16, and an exhaust 76 fluidicly coupled to the intake 74. A turbine chamber 78 is fluidicly coupled between the intake 74 and the exhaust 76. A plurality of expansion stages 80 are disposed within the turbine chamber 78. In an exemplary embodiment, the power turbine 18 weighs about 3,255 lbs, In several exemplary embodiments, the exhaust 76 is fluidicly coupled to one or more lines, chutes, pipes, conduits or the like (not shown) via which hot gas is adapted to be directed away from the exhaust 76, under conditions to be described below.

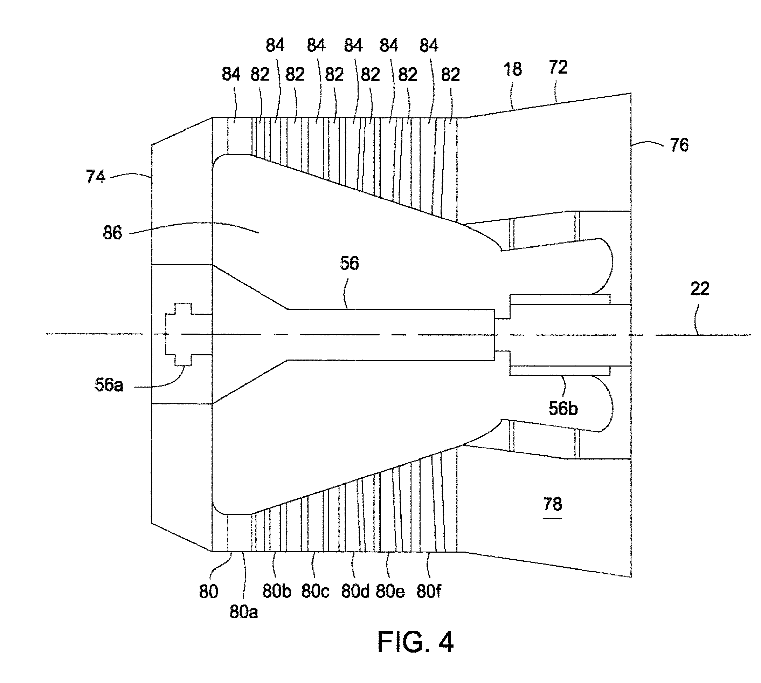

In an exemplary embodiment, as illustrated in Figure 4 with continuing reference to Figures 1-3, the plurality of expansion stages 80 of the power turbine 18 of the aeroderivative gas turbine 14 includes six (6) expansion stages, namely expansion stages 80a, 80b, 80c, 80d, 80e and 80f, each of which includes a rotor blade 82 and a static nozzle vane 84 disposed proximate thereto. Each of the static nozzle vanes 84 is coupled to the casing 72 of the power turbine 18. In an exemplary embodiment, each of the static nozzle vanes 84 is coupled to the casing 72 of the power turbine 18 by a separate annular shroud (not shown). Each of the rotor blades 82 is coupled to, and extends radially outwardly away from, the shaft 56, and is adapted to rotate within the casing 72, under conditions to be described below. In an exemplary embodiment, a rotor 86 is coupled to the shaft 56, and each of the rotor blades 82 is coupled to, and extends radially outwardly away from, the rotor 86, thereby providing the coupling between blades 82 and the shaft 56.

In an exemplary embodiment, the power turbine 18 is a low speed power turbine (LSPT) and the expansion stages 80a, 80b, 80c, 80d, 80e and 80f of the power turbine 18 are configured to drive the shaft 56 and thus the shaft 58 at a rotational speed of about 3,600 rotations per minute (rpm), under conditions to be described below. In an exemplary embodiment, the power turbine 18 is a low speed power turbine (LSPT) and the expansion stages 80a, 80b, 80c, 80d, 80e and 80f of the power turbine 18 are configured to drive the shaft 56 and thus the shaft 58 at a rotational speed of about 3,600 rotations per minute (rpm), and to produce a power rating of less than about 85,000 horsepower (hp), under conditions to be described below. In an exemplary embodiment, the power turbine 18 is a low speed power turbine (LSPT) and the expansion stages 80a, 80b, 80c, 80d, 80e and 80f of the power turbine 18 are configured to drive the shaft 56 and thus the shaft 58 at a rotational speed of less than about 3,800 rotations per minute (rpm), and to produce a power rating of less than about 50,000 horsepower (hp), under conditions to be described below. In an exemplary embodiment, instead of six (6) expansion stages, the plurality of expansion stages 80 of the power turbine 18 includes four (4) expansion stages. In several exemplary embodiments, instead of six (6) or four (4) expansion stages, the plurality of expansion stages 80 of the power turbine 18 includes a different quantity of expansion stages. In an exemplary embodiment, the power turbine 18 is configured to drive the shaft 56 and thus the shaft 58 at a rotational speed within a predetermined range of rotational speeds, under conditions to be described below. In an exemplary embodiment, the power turbine 18 is configured to drive the shaft 56 and thus the shaft 58 at a rotational speed ranging from about 2,000 rpm to about 4,000 rpm, under conditions to be described below. In an exemplary embodiment, the maximum speed at which the power turbine 18 is configured to drive the shaft 56 and thus the shaft 58 is about 3,780 rpm. In an exemplary embodiment, the power turbine 18 has an ISO rating (15 degrees C) of 45,100 horsepower, with a peak power of about 49,900 horsepower near -5 degrees C. In an exemplary embodiment, the power turbine 18 has a power rating of less than about 55,000 horsepower (hp). In an exemplary embodiment, the power turbine 18 has a power rating of less than about 50,000 horsepower (hp). In an exemplary embodiment, the power turbine 18 is a modular unit of the aeroderivative gas turbine 14, and is permitted to be decoupled from, and re-coupled to, the gas generator 16 as a modular unit, under conditions to be described below. In an exemplary embodiment, the power turbine 18 weighs about 3,255 lbs.

In an exemplary embodiment, the aeroderivative gas turbine 14 has a relatively low weight. In an exemplary embodiment, the gas generator 16 has a weight ranging from about 4,590 lbs to about 7,625 lbs. In an exemplary embodiment, the aeroderivative gas turbine 14 has a weight ranging from about 7,845 lbs to about 10,880 lbs. In an exemplary embodiment, the aeroderivative gas turbine 14 is an LM2500+G4 LSPT aeroderivative gas turbine having a low speed power turbine (LSPT) with six (6) expansion stages, which type of aeroderivative gas turbine is commercially available from GE Aviation, Evendale, Ohio, USA, which is a subsidiary of the General Electric Company, Fairfield, Connecticut, USA. In an exemplary embodiment, the aeroderivative gas turbine 14 is another type of commercially available aeroderivative gas turbine.

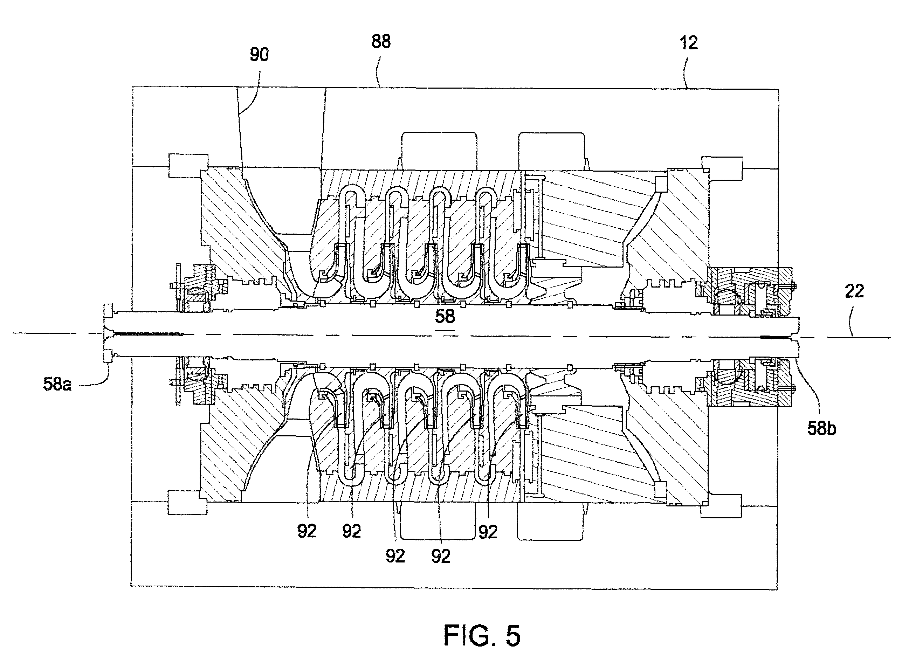

In an exemplary embodiment, as illustrated in Figure 5 with continuing reference to Figures 1-4, the compressor 12 includes a casing 88, an inlet 90, and an outlet (not shown) fluidicly coupled to the inlet 90. A plurality of impellers 92 are coupled to the shaft 58 and are configured to rotate along with shaft 58, under conditions to be described below. In an exemplary embodiment, the compressor 12 is configured to operate with a refrigerant flowing therethrough at a flow rate ranging from about 40,000 actual cubic feet per minute (ACFM) to about 70,000 ACFM, with the shaft 58 being directly driven by the shaft 56 of the power turbine 18 of the aeroderivative gas turbine 14 at a rotational speed ranging from about 2,000 rpm to about 4,000 rpm, thereby pressurizing the refrigerant to a pressure upon discharge from the compressor 12 ranging from about 30 pounds per square inch absolute (psia) to about 300 psia, under conditions to be described below. In an exemplary embodiment, the compressor 12 is configured to operate with a refrigerant flowing therethrough at a flow rate ranging from about 40,000 actual cubic feet per minute (ACFM) to about 70,000 ACFM, with the shaft 58 being directly driven by the shaft 56 of the power turbine 18 of the aeroderivative gas turbine 14 at a rotational speed of about 3,600 rpm, thereby pressurizing the refrigerant to a pressure upon discharge from the compressor 12 ranging from about 30 psia to about 300 psia, under conditions to be described below. In an exemplary embodiment, the compressor 12 is, includes, or is at least a part of, a centrifugal compressor. In an exemplary embodiment, the compressor 12 is a DATUM™ centrifugal compressor, which type of compressor is commercially available from the Dresser-Rand Company, Houston, Texas, USA. In an exemplary embodiment, the compressor 12 is another type of commercially available centrifugal compressor.

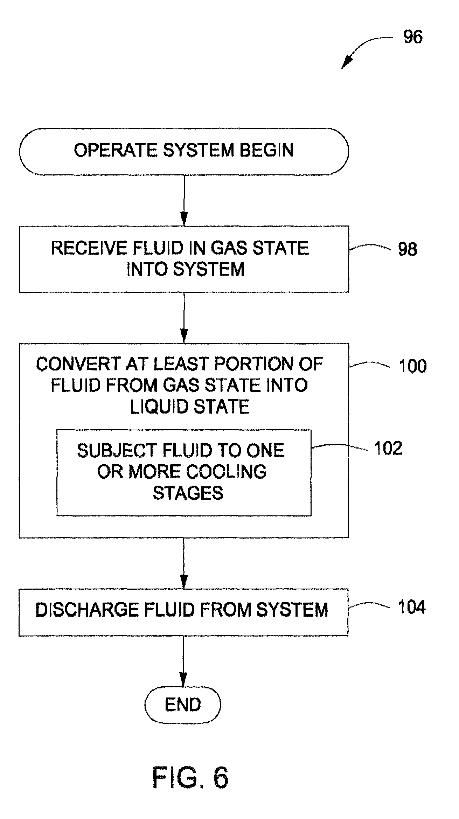

In an exemplary embodiment, as illustrated in Figure 6 with continuing reference to Figures 1-5, a method of operating the system 10 is generally referred to by the reference numeral 96 and includes receiving a fluid in a gas state into the system 10 in step 98, converting at least a portion of the fluid from the gas state into a liquid state in step 100 including subjecting the fluid to one or more cooling stages in step 102, and discharging the fluid from the system 10 in step 104. in an exemplary embodiment, the fluid in the gas state received into the system 10 in the step 98 is natural gas, and at least a portion of the fluid is liquefied natural gas when the fluid is discharged from the system 10 in the step 104.

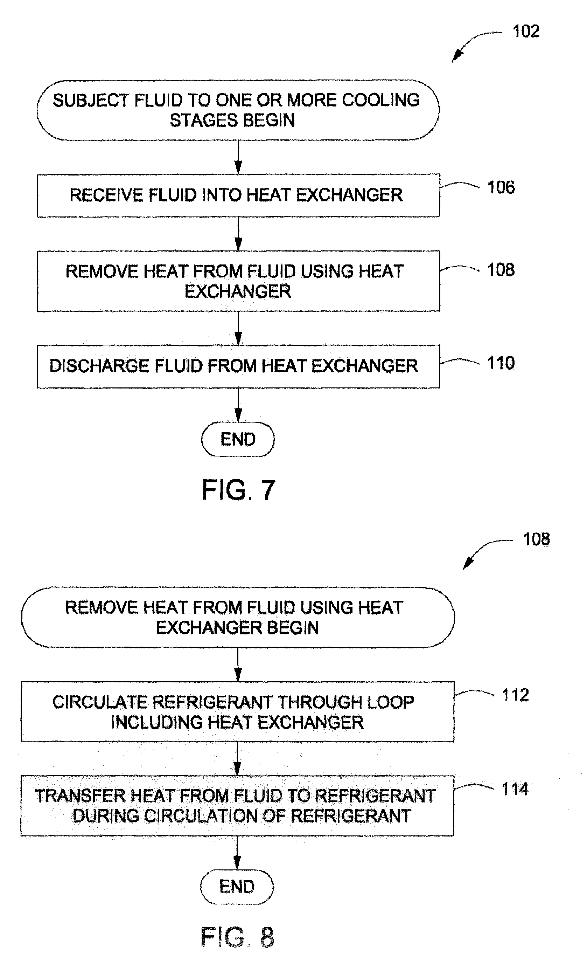

In an exemplary embodiment, as illustrated in Figure 7 with continuing reference to Figures 1-6, subjecting the fluid to one or more cooling stages in the step 102 includes receiving the fluid into the heat exchanger 24 via the line 48 in step 106, removing heat from the fluid using the heat exchanger 24 in step 108, and discharging the fluid from the heat exchanger 24 via the line 50 in step 110.

In an exemplary embodiment, as illustrated in Figure 8 with continuing reference to Figures 1-7, to remove heat from the fluid using the heat exchanger 24 in the step 108, a refrigerant is circulated through the loop 38 in step 112, and heat is transferred from the fluid to the refrigerant in step 114 during the circulation of the refrigerant through the loop 38 in the step 112. In the step 112, the refrigerant continually flows through the compressor 12, the line 30, the condenser 26, the line 34, the expansion valve 32, the line 36, the heat exchanger 24, and the line 28, as indicated by the arrows 40, 42, 44 and 46 (shown in Figure 1). In an exemplary embodiment, the refrigerant circulated through the loop 38 in the step 112 is propane. In an exemplary embodiment, the refrigerant circulated through the loop 38 in the step 112 is ethylene. In an exemplary embodiment, the refrigerant circulated through the loop 38 in the step 112 is methane. In an exemplary embodiment, the refrigerant circulated through the loop 38 in the step 112 is a gas with relatively high molecular weight.

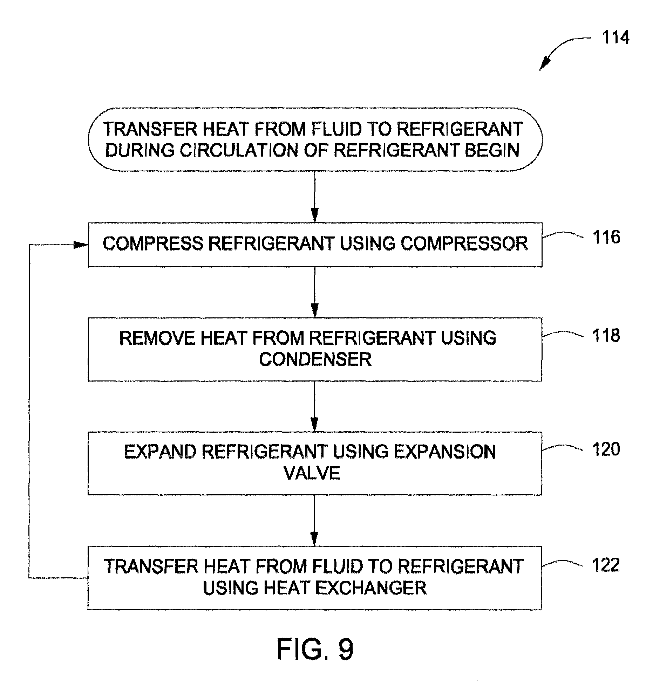

In an exemplary embodiment, as illustrated in Figure 9 with continuing reference to Figures 1-8, to transfer heat from the fluid to the refrigerant in the step 114 during the step 112, the refrigerant is compressed using the compressor 12 in step 116, thereby pressurizing the refrigerant. Heat is removed from the refrigerant using the condenser 26 in step 118, and the refrigerant is expanded using the expansion valve 106 in step 120. Heat is transferred from the fluid flowing through the heat exchanger 24 and into the refrigerant flowing through the heat exchanger 24 in step 122. The steps 116, 118, 120 and 122 are continually repeated during the circulation of the refrigerant through the loop 38 in the step 114. In an exemplary embodiment, the steps 116, 118, 120 and 122 together form, or are at least a part of, one or more refrigeration cycles.

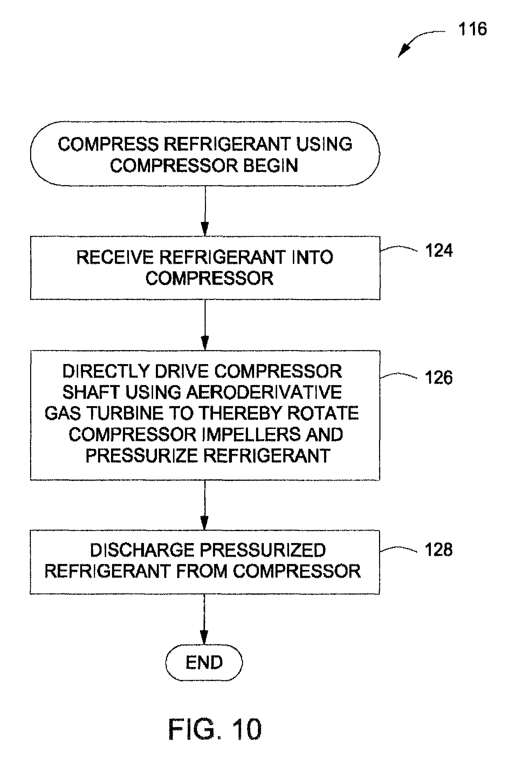

In an exemplary embodiment, as illustrated in Figure 10 with continuing reference to Figures 1-9, to compress the refrigerant using the compressor 12 in the step 116, the refrigerant is received into the compressor 12 via the line 28 and the inlet 90 in step 124, the shaft 58 is directly driven by the aeroderivative gas turbine 14 to thereby rotate the impellers 92 and pressurize the refrigerant in step 126, and the pressurized refrigerant is discharged from the compressor 12 and into the line 30 in step 128. During each of the steps 124, 126 and 128, the flow rate of the refrigerant ranges from about 40,000 ACFM to about 70,000 ACFM. As a result of the pressurization of the refrigerant in the step 126, the pressurized refrigerant is discharged from the compressor 12 in the step 128 at a pressure ranging from about 30 psia to about 300 psia. During the step 126, the shaft 58 of the compressor 12 is directly driven by the aeroderivative gas turbine 14 so that the shaft 58 rotates in place about the axis 22 at a rotational speed ranging from about 2,000 rpm to about 4,000 rpm. In an exemplary embodiment, during the step 125, the shaft 58 of the compressor 12 is directly driven by the aeroderivative gas turbine 14 so that the shaft 58 rotates in place about the axis 22 at a rotational speed of about 3,600 rpm.

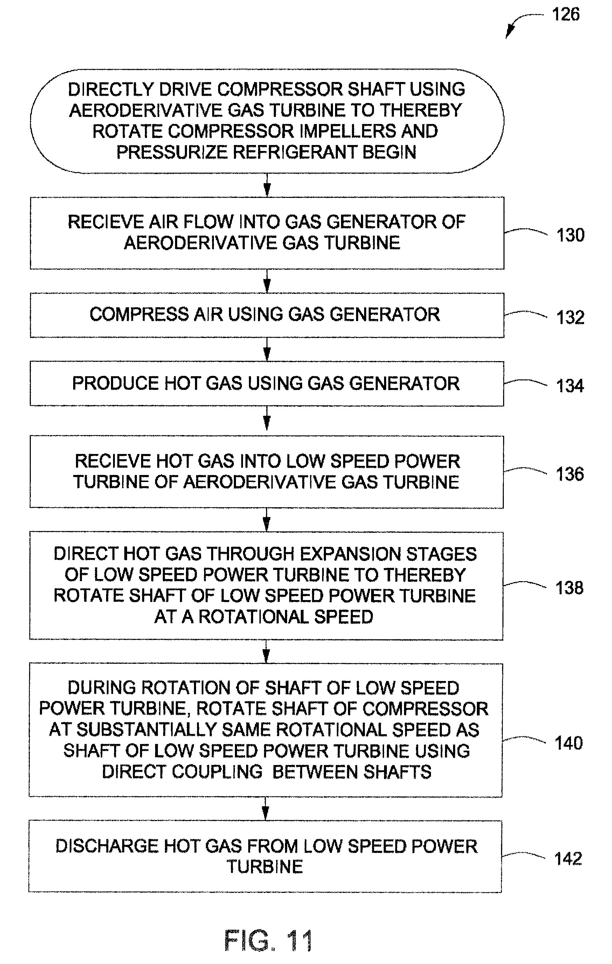

In an exemplary embodiment, as illustrated in Figure 11 with continuing reference to Figures 1-10, to directly drive the shaft 58 of the compressor 12 using the aeroderivative gas turbine 14 in the step 126, air flows into the gas generator 16 and thus the aeroderivative gas turbine 14 via the inlet 60 of the gas generator 16 in step 130, the air is compressed by the compressor 66 of the gas generator 16 in step 132, and the compressed air is mixed with fuel and ignited to produce hot gas in the combustion chamber 68 of the gas generator 15 in step 134. The hot gas exits the gas generator 16 via the outlet 62 of the gas generator 16 and enters the power turbine 18 via the inlet 74 of the power turbine 18 in step 136. The hot gas is directed through the expansion stages 80a, 80b, 80c, 80d, 80e and 80f of the power turbine 18 in step 138, thereby causing the shaft 56 of the power turbine 18 to rotate in place about the axis 22, which, in turn, directly drives the shaft 58 of the compressor 12. More particularly, as the hot gas flows through each of the stages 80a, 80b, 80c, 80d, 80e and 80f, the corresponding static nozzle vane 84 directs the hot gas against the corresponding rotor blade 82, thereby causing torque to be exerted on the shaft 56, thereby causing the shaft 56 to rotate in place about the axis 22. Since the shaft 56 of the power turbine 18 is directly coupled to the shaft 58 of the compressor 12, the rotation of the shaft 56 in the step 138 directly drives the shaft 58, causing the shaft 58 of the compressor 12 to rotate during the rotation of the shaft 56 of the power turbine 18 in step 140. As a result, during at least a portion of the step 140, the respective rotational speeds of the shafts 56 and 58 are substantially equal. In an exemplary embodiment, during at least a portion of the step 140, the rotational speed of each of the shafts 56 and 58 ranges from about 2,000 rpm to about 4,000 rpm. In an exemplary embodiment, during at least the step 140, the rotational speed of each of the shafts 56 and 58 is about 3,600 rpm. The hot gas exits the power turbine 18 and thus the aeroderivative gas turbine 14 via the exhaust 76 of the power turbine 18 in step 142. In several exemplary embodiments, during at least a portion of the circulation of the refrigerant through the loop 38 in the step 112, the steps 132, 134, 136, 138, 140 and 142 occur simultaneously and/or are continually repeated.

The above-described direct coupling of the shaft 56 of the power turbine 18 of the aeroderivative gas turbine 14 to the shaft 58 of the compressor 12 permits the shaft 56 to directly drive the shaft 58 in the step 126. Since the shaft 56 directly drives the shaft 58 of the compressor 12 in the step 126, no speed-changing devices, such as, for example, gearboxes, gearing and/or similar mechanisms, are necessary for the shaft 56 to drive the shaft 58. The above-described direct coupling between the shafts 56 and 58 eliminates the need for a gearbox. The elimination of the need for a speed-changing device, such as a gearbox, to drive the compressor 12 provides additional liquefaction of the gas flowing into the heat exchanger 24 via the line 48 due to increased compressor throughput that arises from the recovery of friction power losses that are associated with a gearbox, which are typically on the order of about 1.5%. Further, the elimination of the need for a gearbox to drive the compressor 12 provides incremental equipment reliability and availability due to the elimination of a major piece of rotating machinery. Still further, the elimination of the need for a gearbox to drive the compressor 12 provides a reduced installation footprint by eliminating the gearbox from the line of rotating machinery.

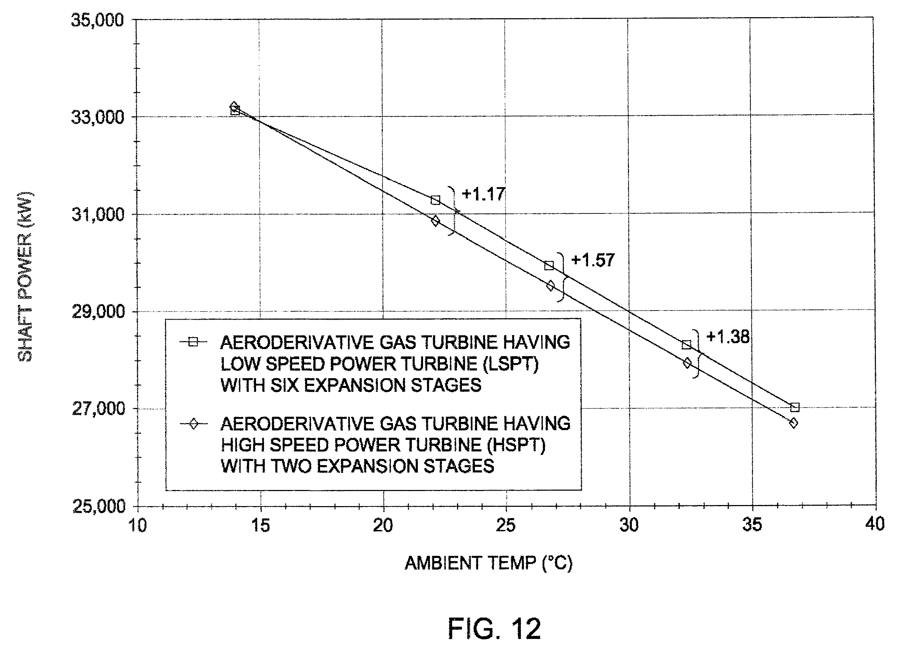

In an exemplary calculated embodiment, as illustrated in Figure 12 with continuing reference to Figures 1-11, exemplary calculations were conducted, the calculation results of which indicated that the use of the aeroderivative gas turbine 14 having the low speed power turbine (LSPT) 18 with the six (6) expansion stages 80a, 80b, 80c, 80d, 80e and 80f, which could be, for example, an LM2500+G4 LSPT aeroderivative gas turbine having a low speed power turbine (LSPT) with six (6) expansion stages, which type of aeroderivative gas turbine is commercially available from GE Aviation, Evendale, Ohio, USA, would provide more shaft power than the use of an aeroderivative gas turbine having a high speed power turbine (HSPT) with two (2) expansion stages, which could be, for example, an LM2500+G4 HSPT aeroderivative gas turbine having a high speed power turbine (HSPT) with two (2) expansion stages, which type of high speed power turbine may be a Dresser-Rand VECTRA™ 40G4, which is commercially available from the Dresser-Rand Company, Houston, Texas, USA, or which type of high speed power turbine may be a General Electric PGT25+G4, which is commercially available from GE Oil and Gas, Florence, Italy; indeed, in an exemplary calculated embodiment, exemplary calculation results indicated that, with all other parameters being the same, the use of the low speed power turbine (LSPT) 18 having six (6) expansion stages 80a, 80b, 80c, 80d, 80e and 80f in the aeroderivative gas turbine 14 would offer more shaft power than a high speed power turbine (HSPT) having two (2) expansion stages in the aeroderivative gas turbine 14 at all site conditions for the conventional T48 control temperature of 1551 degrees F. These exemplary calculation results were unexpected. More particularly, as shown in Figure 12, exemplary calculations were conducted using the gas turbine manufacturer's performance cycles program in accordance with ASME PTC 22-2005, the calculation of which indicated that, with the performance basis and all other parameters being the same, the use of the aeroderivative gas turbine 14 having the low speed power turbine (LSPT) 18 with the six (6) expansion stages 80a, 80b, 80c, 80d, 80e and 80f, which could be, for example, an LM2500+G4 LSPT aeroderivative gas turbine having a low speed power turbine (LSPT) with six (6) expansion stages, would offer more shaft power over a range of ambient temperatures, such as, for example, about 1.17% more shaft power at an ambient temperature ranging from about 22 to about 23 degrees C, about 1.57% more shaft power at an ambient temperature of about 27 degrees C, and about 1.38% more shaft power at an ambient temperature ranging from about 32 to about 33 degrees C, as compared to the use of an aeroderivative gas turbine having a high speed power turbine (HSPT) with two (2) expansion stages, which could be, for example, an LM2500+G4 HSPT aeroderivative gas turbine having a high speed power turbine (HSPT) with two (2) expansion stages. These exemplary calculation results were unexpected. Based on these unexpected exemplary calculation results, it was determined that, based on the same T48 temperature, an aeroderivative gas turbine having a low speed power turbine (LSPT) with six (6) expansion stages would provide more power than an aeroderivative gas turbine having a high speed power turbine (HSPT) with two (2) expansion stages. This determination, which was based on the exemplary calculation results, was unexpected. The performance basis and/or parameters for the exemplary calculations, the calculation results of which are shown in Figure 12, included the following: conventional T48 control temperature of 1551 degrees F; 100-mm H20 inlet and exhaust pressure losses; 70% relative humidity; 1.012-barA barometer; dry, low emissions (DLE) combustor; design feed case fuel gas, 25 degrees C supply; 100% shaft speed with 3,600 rpm for LSPT and 6,100 rpm for HSPT; and gear losses not considered. Based on the unexpected exemplary calculation results shown in Figure 12, additional exemplary calculations were conducted, the calculation results of which indicated that the incremental benefit in liquefied natural gas (LNG) production due to the selection of a low speed power turbine (LSPT) in the aeroderivative gas turbine 14 over a high speed (HSPT) in the aeroderivative gas turbine 14 would be about $176,000,000 net present value (NPV) with respect to operating income (Ol); the shaft power increase shown in Figure 12 would enable the amount of fluid converted into a liquid state, such as, for example, the amount of produced liquefied natural gas, to increase, resulting in an NPV of $176,000,000 with respect to operating income (Ol). The assumptions for these exemplary calculations included the following: life cycle time of 25 years; net present value (NPV) based on 15% yearly discount; project cost of eight billion dollars; bank financial loan interest of 5%; gas price at entry of plant (at the fence) of 3.5 $ per MBtu; gas price at jetty (LNG price 75% of Henry Hubb) of 6.26 $ per MBtu; LNG price per ton of 327.7 $ per ton; LNG spot price of 655.3 $ per ton; plant size of 4.3 MTPA per line or LNG; and two lines of LNG.

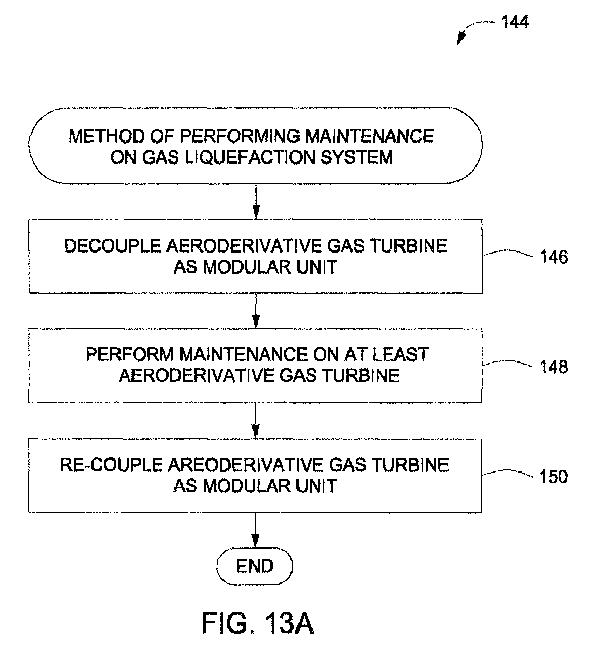

In an exemplary embodiment, as illustrated in Figure 13A with continuing reference to Figures 1-12, a method of performing maintenance on the gas liquefaction system 10 is generally referred to by the; reference numeral 144 and includes decoupling the aeroderivative gas turbine 14, including the gas generator 16 and the power turbine 18, as a modular unit from the remainder of the system 10 in step 146. Before, during and/or after the step 146, maintenance is performed on at least the aeroderivative gas turbine 14 in step 148. Before, during and/or after the step 148, the aeroderivative gas turbine 14 is re-coupled to the remainder of the system 10 as a modular unit in step 150.

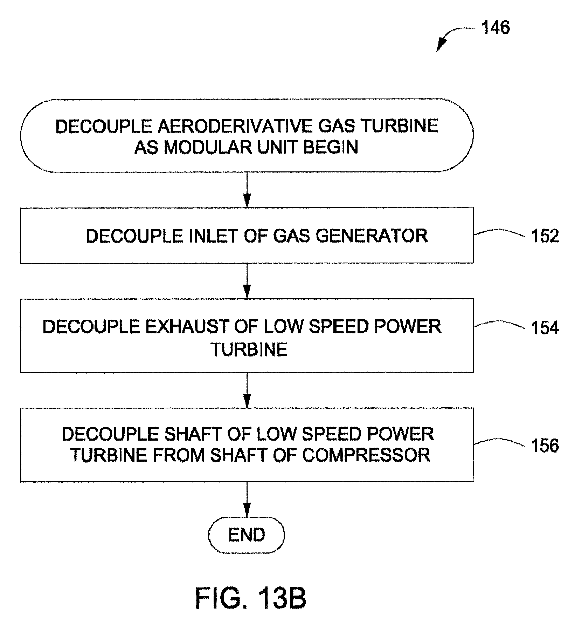

In an exemplary embodiment, as illustrated in Figure 13B with continuing reference to Figures 1-13A, to decouple the aeroderivative gas turbine 14 from the remainder of the system 10 as a modular unit in the step 146, the aeroderivative gas turbine 14 is decoupled as a modular unit. More particularly, the inlet 60 of the gas generator 16 of the aeroderivative gas turbine 14 is decoupled in step 152 from one or more lines, chutes, pipes, conduits or the like (not shown) via which air is directed to the gas generator 16. Before, during and/or after the step 152, the exhaust 76 is decoupled in step 154 from one or more lines, chutes, pipes, conduits or the like (not shown) via which hot gas is directed away from the power turbine 18. Before, during and/or after the steps 152 and 154, the shaft 56 of the power turbine 18 is decoupled from the shaft 58 of the compressor 12 in step 156, which, in an exemplary embodiment, includes decoupling the end portion 56b of the shaft 56 of the power turbine 18 of the aeroderivative gas turbine 14 from the end portion 20a of the coupling 20. In several exemplary embodiments, the step 156 includes one or more of the following: decoupling the coupling 20 from the shaft 58 of the compressor 12; decoupling the shaft 56 of the power turbine 18 from the coupling 20; decoupling the shaft 56 of the power turbine 18 from the shaft 58 of the compressor 12; decoupling the end portion 20b from the end portion 58a; and decoupling the end portion 56b from the end portion 58a. In several exemplary embodiments, before, during and/or after the steps 146 and/or 148, the power turbine 18 is decoupled from the gas generator 16 as a modular unit.

In an exemplary embodiment, to re-couple the aeroderivative gas turbine 14 to the remainder of the system 10 in the step 150 of the method 144, the inlet 60 of the gas generator 15 of the aeroderivative gas turbine 14 is re-coupled to one or more lines, chutes, pipes, conduits or the like (not shown) via which air is directed to the gas generator 16, the exhaust 76 is re-coupled to one or more lines, chutes, pipes, conduits or the like (not shown) via which hot gas is directed away from the power turbine 18, the shaft 56 of the power turbine 18 is re-coupled to the shaft 58 of the compressor 12, which, in an exemplary embodiment, includes re-coupling the end portion 56b of the shaft 56 of the power turbine 18 of the aeroderivative gas turbine 14 to the end portion 20a of the coupling 20. In several exemplary embodiments, re-coupling the shaft 56 to the shaft 58 includes one or more of the following: re-coupling the coupling 20 to the shaft 58 of the compressor 12; re-coupling the shaft 56 of the power turbine 18 to the coupling 20; re-coupling the shaft 56 of the power turbine 18 to the shaft 58 of the compressor 12; re-coupting the end portion 20b to the end portion 58a; and re-coupling the end portion 56b to the end portion 58a. In several exemplary embodiments, before, during and/or after the steps 146, 148 and/or 150, the power turbine 18 is re-coupled to the gas generator 15 as a modular unit.

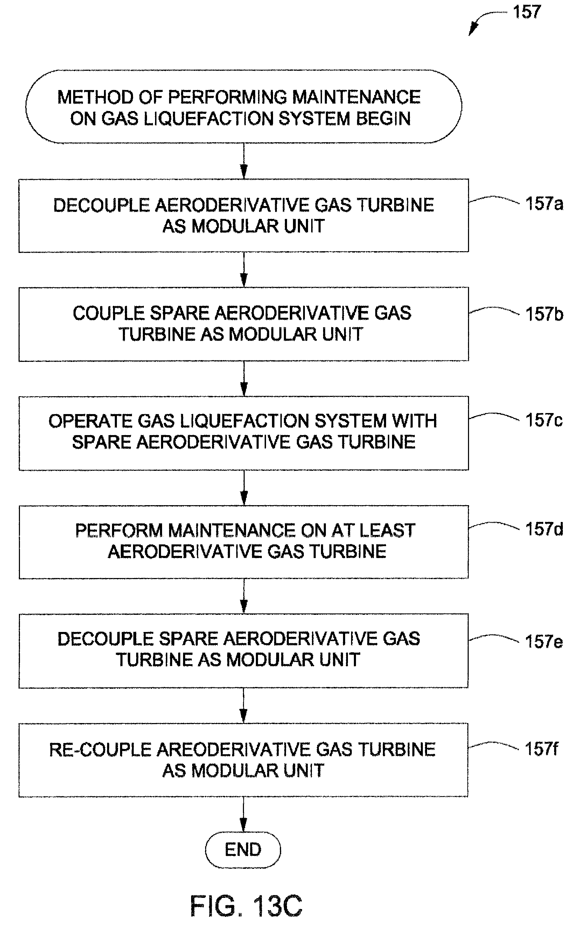

In an exemplary embodiment, as illustrated in Figure 13C with continuing reference to Figures 1-13B, a method of performing maintenance on the gas liquefaction system 10 is generally referred to by the reference numeral 157 and includes decoupling the aeroderivative gas turbine 14, including the gas generator 16 and the power turbine 18, as a modular unit from the remainder of the system 10 in step 157a. Before, during and/or after the step 157a, a spare aeroderivative gas turbine, which is substantially similar to the aeroderivative gas turbine 14, is coupled to the remainder of the system 10 as a modular unit in step 157b, after which the system 10 is operated in step 157c in accordance with the foregoing. Before, during and/or after the steps 157a, 157b and/or 157c, maintenance is performed on at least the aeroderivative gas turbine 14 in step 157d. Before, during and/or after the step 157d, the spare aeroderivative gas turbine is decoupled from the remainder of the system 10 in step 157e. Before, during and/or after the steps 157d and/or 157e, the aeroderivative gas turbine 14 is re-coupled to the remainder of the system 10 as a modular unit in step 157f. The step 157a is substantially similar to the step 146 and therefore will not be described in detail. The step 157b is substantially similar to the step 150 and therefore will not be described in detail, except that the spare aeroderivative gas turbine is coupled to the remainder of the system 10 in the step 157b, rather than the aeroderivative gas turbine 14. The step 157c is substantially similar to the method 96 and therefore will not be described in detail, except that the system 10 is operated with the spare aeroderivative gas turbine in the step 157c, rather than the aeroderivative gas turbine 14. The step 157d is substantially similar to the step 148 and therefore will not be described in detail. The step 157e is substantially similar to either the step 146 or the step 157a and therefore will not be described in detail, except that the spare aeroderivative gas turbine is decoupled from the remainder of the system 10 in the step 157e, rather the aeroderivative gas turbine 14. The step 157f is substantially similar to the step 150 and therefore will not be described in detail.

The relatively low weight of the aeroderivative gas turbine 14, and the decoupling of the aeroderivative gas turbine 14 from the remainder of the system 10 as a modular unit in the step 146 or 157a, make the aeroderivative gas turbine 14 readily removable from the compressor 12 in the form of a complete gas turbine. The modularity of the aeroderivative gas turbine 14, with respect to at least the compressor 12, results in a substantial reduction in "down time" in that, during routine maintenance, the aeroderivative gas turbine 14 and/or its components such as the gas generator 16 and/or the power turbine 18 do not need to be disassembled in place in the system 10 and/or while the aeroderivative gas turbine 14 is coupled to the compressor 12. In an exemplary embodiment, the modularity of the aeroderivative gas turbine 14, i.e., the ability to decouple the aeroderivative gas turbine 14 from the remainder of the system 10 as a modular unit in the step 146 or 157a, translates to up to ten (10) or more days of production over a typical project evaluation life cycle, thereby providing substantially greater economic return on the capital investment of the owner(s) of the system 10.

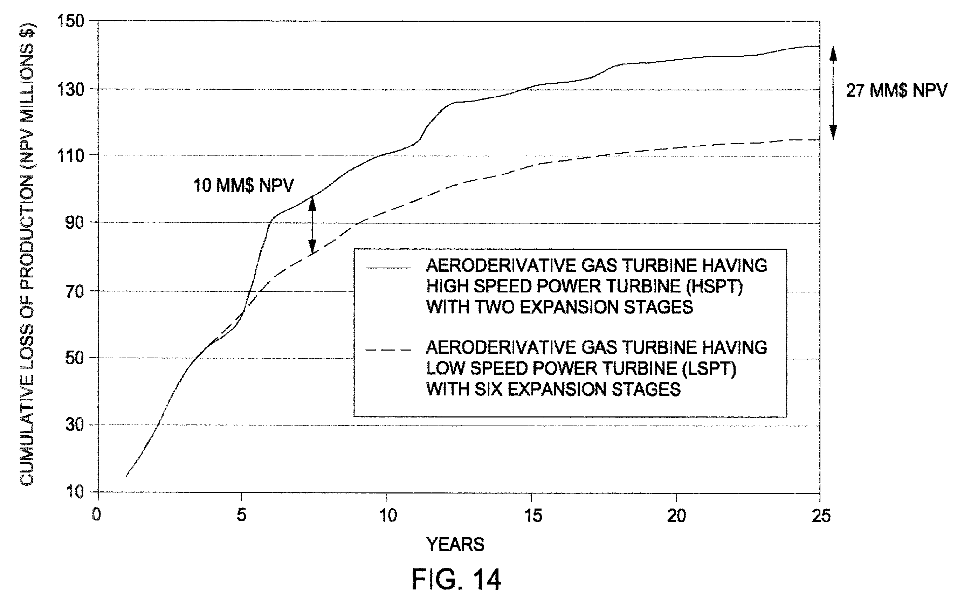

In an exemplary embodiment, as illustrated in Figure 14 with continuing reference to Figures 1-13C, exemplary calculations were conducted, the calculation results of which indicated that the use of the aeroderivative gas turbine 14 having the low speed power turbine (LSPT) 18 with the six (6) expansion stages 80a, 80b, 80c, 80d, 80e and 80f, which could be, for example, an LM2500+G4 LSPT aeroderivative gas turbine having a low speed power turbine (LSPT) with six (6) expansion stages, which type of aeroderivative gas turbine is commercially available from GE Aviation, Evendale, Ohio, USA, would reduce the cost associated with cumulative loss of production as a result of "down time" for routine and/or scheduled maintenance of at least the aeroderivative gas turbine 14, that is, the cost associated with not being able to convert as much of the fluid as possible into a liquid state in the step 100 of the method 96 because the aeroderivative gas turbine 14 and the compressor 12 are inoperable due to routine and/or scheduled maintenance, than the use of an aeroderivative gas turbine having a high speed power turbine (HSPT) with two (2) expansion stages, which could be, for example, an LM2500+G4 HSPT aeroderivative gas turbine having a high speed power turbine (HSPT) with two (2) expansion stages, which type of high speed power turbine may be a Dresser-Rand VECTRA® 40G4, which is commercially available from the Dresser-Rand Company, Houston, Texas, USA, or which type of high speed power turbine may be a General Electric PGT25+G4, which is commercially available from GE Oil and Gas, Florence, Italy. As shown in Figure 14, exemplary calculations were conducted, the calculation results of which indicated that, with the performance basis and all other parameters being the same, the use of the aeroderivative gas turbine 14 having the low speed power turbine (LSPT) 18 with the six (6) expansion stages 80a, 80b, 80c, 80d, 80e and 80f, which could be, for example, an LM2500+G4 LSPT aeroderivative gas turbine having a low speed power turbine (LSPT) with six (6) expansion stages, in accordance with the method 157, would provide a cost savings associated with cumulative loss of production as a result of "down time" for routine and/or scheduled maintenance over the operational life of the aeroderivative gas turbine 14 of, for example, about $10,000,000 after an operational time period of about eight years, and about $27,000,000 after an operational time period of about twenty five years, as compared to the use of an aeroderivative gas turbine having a high speed power turbine (HSPT) with two (2) expansion stages, which could be, for example, an LM2500+G4 HSPT aeroderivative gas turbine having a high speed power turbine (HSPT) with two (2) expansion stages. These exemplary calculation results were unexpected. The cost savings shown in Figure 14 are based on, inter alia, the scheduled maintenance for both the LM2500+G4 LSPT aeroderivative gas turbine and the LM2500+G4 HSPT aeroderivative gas turbine, plant nominal capacity, and incremental sales rather than operating income (01). The shorter maintenance schedule of the aeroderivative gas turbine 14 having the low speed power turbine (LSPT) 18 with the six (6) expansion stages 80a, 80b, 80c, 80d, 80e and 80f would provide the exemplary calculated cost savings shown in Figure 14. More particularly, the execution of the method 157 greatly reduces the amount of days of "down time" of the aeroderivative gas turbine 14 and the compressor 12, The exemplary calculated cost savings shown in Figure 14 assume that routine and/or scheduled maintenance performed on at least the aeroderivative gas turbine 14, in accordance with the method 157, would take no more than about two days.

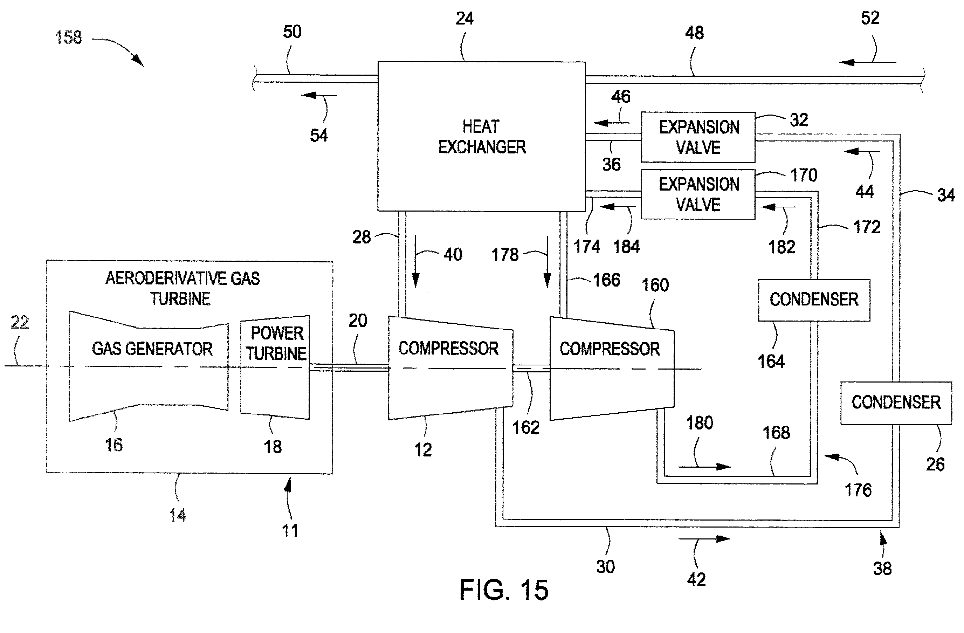

In an exemplary embodiment, as illustrated in Figure 15 with continuing reference to Figures 1-14, a system is generally referred to by the reference numeral 158 and includes several parts of the system 10, which parts are given the same reference numerals. As shown in Figure 15, the system 158 further includes a compressor 160 directly coupled to the compressor 12 via a coupling 162. The compressor 160 is fluidicly coupled between the heat exchanger 24 and a condenser 164 via lines 166 and 168, respectively. An expansion element, such as an expansion valve 170, is fluidicly coupled between the condenser 164 and the heat exchanger 24 via lines 172 and 174, respectively. The heat exchanger 24, the compressor 160, the condenser 164, the expansion valve 170, and the lines 166, 168, 172 and 174 together form, or are at least a part of, a loop 176, through which a refrigerant is adapted to circulate in a direction indicated by arrows 178, 180, 182 and 184. In an exemplary embodiment, the compressor 12 in the system 158 is a double flow compressor, and the compressor 160 is a single flow compressor.

In an exemplary embodiment, the operation of the system 158 is similar to the method 96 of operation of the system 10 and will not be described in detail, except that the aeroderivative gas turbine 14 also drives the compressor 160, in addition to driving the compressor 12; the step 112 includes circulating refrigerant through the loop 176, in addition to circulating refrigerant through the loop 38; and the step 114 includes transferring heat from the fluid, which flows through the line 48, the heat exchanger 24, and the line 50, into the refrigerant circulating through the loop 176, in addition to the refrigerant circulating through the loop 38. In an exemplary embodiment, maintenance is performed on the system 158 in a manner substantially similar to the method 144. In an exemplary embodiment, maintenance is performed on the system 158 in a manner substantially similar to the method 157.

In several exemplary embodiments, instead of, or in addition to one or more of the compressors 12 and 160, one or more other compressors are driven by the aeroderivative gas turbine 14 in the systems 10 and/or 158.

In several exemplary embodiments, one or more waste heat recovery cycles and/or systems are operably coupled to the aeroderivative gas turbine 14. In several exemplary embodiments, one or more waste heat recovery cycles and/or systems are operably coupled between the aeroderivative gas turbine 14 and the heat exchanger 24. In several exemplary embodiments, one or more waste heat recovery cycles and/or systems are operably coupled to the aeroderivative gas turbine 14 and one or more other components of the system 10 such as, for example, one or more of the heat exchanger 24, the line 48, the line 50, and/or any combination thereof. In several exemplary embodiments, one or more waste heat recovery cycles and/or systems are operably coupled to the aeroderivative gas turbine 14 and one or more other components of the system 158 such as, for example, one or more of the heat exchanger 24, the line 48, the line 50, and/or any combination thereof.

A system has been described that includes a compressor system including a compressor through which a refrigerant is adapted to flow, the compressor including a first shaft; and an aeroderivative gas turbine for driving the compressor, the aeroderivative gas turbine including a gas generator; and a low speed power turbine coupled to the gas generator, the low speed power turbine including a second shaft directly coupled to the first shaft of the compressor for directly driving the first shaft; wherein the respective rotational speeds of the first and second shafts are substantially equal. In an exemplary embodiment, the system includes a gas liquefaction system for converting at least a portion of a fluid from a gas state into a liquid state, the fluid in the gas state including natural gas, the fluid in the liquid state including liquefied natural gas, the gas liquefaction system including one or more cooling stages including the refrigerant; and a loop through which the refrigerant is adapted to circulate, the loop including a heat exchanger for transferring heat out of the fluid and into the refrigerant; the compressor of the compressor system for pressurizing the refrigerant; a condenser for transferring heat out of the refrigerant; and an expansion element for expanding the refrigerant; wherein the aeroderivative gas turbine is coupled to the compressor as a modular unit; wherein the low speed power turbine is coupled to the gas generator as a modular unit; wherein the compressor comprises a centrifugal compressor; wherein the refrigerant flows through the centrifugal compressor at a flow rate ranging from about 40,000 actual cubic feet per minute to about 70,000 actual cubic feet per minute; wherein the compressor pressurizes the refrigerant so that the pressurized refrigerant is discharged from the compressor at a pressure ranging from about 30 pounds per square inch absolute to about 300 pounds per square inch absolute; wherein the low speed power turbine includes at least six expansion stages for driving the second shaft; wherein the at least six expansion stages drives the second shaft so that the low speed power turbine has a power rating of less than about 55,000 horsepower; wherein the first and second shafts are generally axially aligned; and wherein the rotational speed of the first and second shafts ranges from about 2,000 revolutions per minute to about 4,000 revolutions per minute. In an exemplary embodiment, the first and second shafts are generally axially aligned; and wherein the rotational speed of the first and second shafts ranges from about 2,000 revolutions per minute to about 4,000 revolutions per minute. In an exemplary embodiment, the compressor comprises a centrifugal compressor configured so that the refrigerant is adapted to flow through the centrifugal compressor at a flow rate ranging from about 40,000 actual cubic feet per minute to about 70,000 actual cubic feet per minute; and wherein the centrifugal compressor is configured to pressurize the refrigerant so that the pressurized refrigerant is discharged from the centrifugal compressor at a pressure ranging from about 30 pounds per square inch absolute to about 300 pounds per square inch absolute. In an exemplary embodiment, the low speed power turbine includes at least six expansion stages for driving the second shaft; and wherein the at least six expansion stages drives the second shaft so that the low speed power turbine has a power rating of less than about 55,000 horsepower. In an exemplary embodiment, the aeroderivative gas turbine is coupled to the compressor as a modular unit; and wherein the low speed power turbine is coupled to the gas generator as a modular unit. In an exemplary embodiment, the system includes a gas liquefaction system for converting at least a portion of a fluid from a gas state into a liquid state, the fluid in the gas state including natural gas, the fluid in the liquid state including liquefied natural gas, the gas liquefaction system including one or more cooling stages including the refrigerant; and a loop through which the refrigerant is adapted to circulate, the loop including a heat exchanger for transferring heat out of the fluid and into the refrigerant; the compressor of the compressor system for pressurizing the refrigerant; a condenser for transferring heat out of the refrigerant; and an expansion element for expanding the refrigerant.

A method has been described that includes providing a compressor including a first shaft; providing an aeroderivative gas turbine including a power turbine including a second shaft; directly coupling the second shaft of the power turbine to the first shaft of the compressor; circulating a refrigerant through the compressor; and pressurizing the refrigerant with the compressor, including directly driving the compressor using the aeroderivative gas turbine, including rotating the first shaft of the power turbine at a first rotational speed; and rotating the second shaft of the compressor at a second rotational speed; wherein the first and second rotational speeds are substantially equal. In an exemplary embodiment, the method includes converting at least a portion of a fluid from a gas state into a liquid state, the fluid in the gas state including natural gas, the fluid in the liquid state including liquefied natural gas; wherein converting at least a portion of the fluid from the gas state into the liquid state includes transferring heat from the fluid and into the refrigerant; wherein the compressor comprises a centrifugal compressor; wherein the power turbine is a low speed power turbine including at least six expansion stages; wherein circulating the refrigerant through the compressor includes circulating the refrigerant through the compressor at a flow rate ranging from about 40,000 actual cubic feet per minute to about 70,000 actual cubic feet per minute; wherein pressurizing the refrigerant with the compressor includes pressurizing the refrigerant with the compressor so that the pressurized refrigerant is discharged from the compressor at a pressure ranging from about 30 pounds per square inch absolute to about 300 pounds per square inch absolute; wherein rotating the first shaft of the power turbine at the first rotational speed includes driving the first shaft using the at least six expansion stages so that the low speed power turbine has a power rating of less than about 55,000 horsepower; wherein the first and second shafts are generally axially aligned; and wherein each of the first and second rotational speeds ranges from about 2,000 revolutions per minute to about 4,000 revolutions per minute. In an exemplary embodiment, the method includes converting at least a portion of a fluid from a gas state into a liquid state, the fluid in the gas state including natural gas, the fluid in the liquid state including liquefied natural gas; wherein converting at least a portion of the fluid from the gas state into the liquid state incudes transferring heat from the fluid and into the refrigerant. In an exemplary embodiment, the compressor comprises a centrifugal compressor; wherein circulating the refrigerant through the compressor includes circulating the refrigerant through the compressor at a flow rate ranging from about 40,000 actual cubic feet per minute to about 70,000 actual cubic feet per minute; and wherein pressurizing the refrigerant with the compressor includes pressurizing the refrigerant with the compressor so that the pressurized refrigerant is discharged from the compressor at a pressure ranging from about 30 pounds per square inch absolute to about 300 pounds per square inch absolute. In an exemplary embodiment, the power turbine is a low speed power turbine including at least six expansion stages; and wherein rotating the first shaft of the power turbine at the first rotational speed includes driving the first shaft using the at least six expansion stages so that the low speed power turbine has a power rating of less than about 55,000 horsepower. In an exemplary embodiment, the method includes decoupling the aeroderivative gas turbine from the compressor as a modular unit; performing maintenance on at least the aeroderivative gas turbine; and re-coupling the aeroderivative gas turbine to the compressor as a modular unit. In an exemplary embodiment, decoupling the aeroderivative gas turbine from the compressor as a modular unit includes decoupling the first shaft of the power turbine from the second shaft of the compressor; and wherein re-coupling the aeroderivative gas turbine to the compressor as a modular unit includes re-coupling the first shaft of the power turbine to the second shaft of the compressor. In an exemplary embodiment, the first and second shafts are generally axially aligned; and wherein each of the first and second rotational speeds ranges from about 2,000 revolutions per minute to about 4,000 revolutions per minute.

A method has been described that includes providing a gas liquefaction system including a compressor and an aeroderivative gas turbine coupled thereto, the aeroderivative gas turbine including a gas generator and a power turbine coupled thereto; decoupling the aeroderivative gas turbine from a remainder of the gas liquefaction system as a modular unit; performing maintenance on at least the aeroderivative gas turbine; and re-coupling the aeroderivative gas turbine to the remainder of the gas liquefaction system as a modular unit after decoupling the aeroderivative gas turbine from the remainder of the gas liquefaction system as a modular unit. In an exemplary embodiment, the aeroderivative gas turbine includes an inlet for receiving air into the gas generator; wherein the power turbine includes an exhaust for discharging gas from the power turbine, wherein the exhaust is fluidicly coupled to the inlet when the aeroderivative gas turbine is in the form of the modular unit, and a first shaft; wherein the compressor includes a second shaft directly coupled to the first shaft of the power turbine when the aeroderivative gas turbine is coupled to the compressor; and wherein decoupling the aeroderivative gas turbine from the remainder of the gas liquefaction system as a modular unit includes decoupling the inlet of the gas generator from means via which the air is adapted to be directed to the gas generator; decoupling the exhaust of the power turbine from means via which the gas is adapted to be directed away from the power turbine; and decoupling the first shaft from the second shaft. In an exemplary embodiment, re-coupling the aeroderivative gas turbine to the remainder of the gas liquefaction system as a modular unit includes re-coupling the inlet of the gas generator to the means via which the air is adapted to be directed to the gas generator; re-coupling the exhaust of the power turbine to the means via which the gas is adapted to be directed away from the power turbine; and re-coupling the first shaft to the second shaft. In an exemplary embodiment, the method includes converting at least a portion of a fluid from a gas state into a liquid state, the fluid in the gas state including natural gas, the fluid in the liquid state including liquefied natural gas; wherein converting at least a portion of the fluid from the gas state to the liquid state includes subjecting the fluid to one or more cooling stages, including receiving fluid into a heat exchanger fluidicly coupled to the compressor; removing heat from the fluid using the heat exchanger; and discharging the fluid from the heat exchanger; and wherein removing heat from the fluid using the heat exchanger includes circulating a refrigerant through a loop, the loop including the heat exchanger and the compressor; and transferring heat from the fluid and to the refrigerant during circulating the refrigerant through the loop, including transferring heat from the fluid and to the refrigerant using the heat exchanger; and pressurizing the refrigerant with the compressor, including directly driving the compressor using the aeroderivative gas turbine, including rotating the first shaft of the power turbine at a first rotational speed; and rotating the second shaft of the compressor at a second rotational speed; wherein the first and second rotational speeds are substantially equal. In an exemplary embodiment, the method includes coupling a spare aeroderivative gas turbine to the remainder of the gas liquefaction system as a modular unit; operating the gas liquefaction system with the spare aeroderivative gas turbine; and decoupling the spare aeroderivative gas turbine from the remainder of the gas liquefaction system as a modular unit.

It is understood that variations may be made in the foregoing without departing from the scope of the disclosure. In several exemplary embodiments, the elements and teachings of the various illustrative exemplary embodiments may be combined in whole or in part in some or all of the illustrative exemplary embodiments, In addition, one or more of the elements and teachings of the various illustrative exemplary embodiments may be omitted, at least in part, and/or combined, at least in part, with one or more of the other elements and teachings of the various illustrative embodiments.

Any spatial references such as, for example, "upper," "lower," "above," "below," "between," "bottom," "vertical," "horizontal," "angular," "upwards," "downwards," "side-to-side," "left-to-right," "left," "right," "right-to-left," "top-to-battom," "bottom-to-top," "top," "bottom," "bottom-up," "top-down," etc., are for the purpose of illustration only and do not limit the specific orientation or location of the structure described above.

In several exemplary embodiments, while different steps, processes, and procedures are described as appearing as distinct acts, one or more of the steps, one or more of the processes, and/or one or more of the procedures may also be performed in different orders, simultaneously and/or sequentially. In several exemplary embodiments, the steps, processes and/or procedures may be merged into one or more steps, processes and/or procedures, In several exemplary embodiments, one or more of the operational steps in each embodiment may be omitted. Moreover, in some instances, some features of the present disclosure may be employed without a corresponding use of the other features. Moreover, one or more of the above-described embodiments and/or variations may be combined in whole or in part with any one or more of the other above-described embodiments and/or variations. In the claims, any means-plus-function clauses are intended to cover the structures described herein as performing the recited function and not only structural equivalents, but also equivalent structures.

[0057A] The present application is a divisional application of EP 08857104.7. The original claims of EP 08857104.7 are presented as statements below, so that the subject matter of those claims is included in its entirety in the present application.
Statement 1. A system for compressing a refrigerant, the system comprising:
   a compressor system comprising:
      a compressor through which the refrigerant is adapted to flow, the compressor comprising a first shaft; and
      an aeroderivative gas turbine for driving the compressor, the aeroderivative gas turbine comprising:
         a gas generator; and
         a low speed power turbine coupled to the gas generator, the low speed power turbine comprising a second shaft directly coupled to the first shaft of the compressor for directly driving the first shaft;
         wherein the respective rotational speeds of the first and second shafts are substantially equal.
Statement 2. The system of statement 1, further comprising:
   a gas liquefaction system for converting at least a portion of a fluid from a gas state into
      a liquid state, the fluid in the gas state comprising natural gas, the fluid in the liquid state comprising liquefied natural gas, the gas liquefaction system comprising:
      one or more cooling stages comprising:
         the refrigerant; and
         a loop through which the refrigerant is adapted to circulate, the loop
            comprising:
               a heat exchanger for transferring heat out of the fluid and into the refrigerant;
               the compressor of the compressor system for pressurizing the refrigerant;
               a condenser for transferring heat out of the refrigerant; and
               an expansion element for expanding the refrigerant;
   wherein the aeroderivative gas turbine is coupled to the compressor as a modular unit;
   wherein the low speed power turbine is coupled to the gas generator as a modular unit;
   wherein the compressor comprises a centrifugal compressor;
   wherein the refrigerant flows through the centrifugal compressor at a flow rate ranging from about 40,000 actual cubic feet per minute to about 70,000 actual cubic feet per minute;
   wherein the compressor pressurizes the refrigerant so that the pressurized refrigerant is discharged from the compressor at a pressure ranging from about 30 pounds per square inch absolute to about 300 pounds per square inch absolute;
   wherein the low speed power turbine comprises at least six expansion stages for driving the second shaft;
   wherein the at least six expansion stages drives the second shaft so that the low speed power turbine has a power rating of less than about 55,000 horsepower;
   wherein the first and second shafts are generally axially aligned; and
   wherein the rotational speed of the first and second shafts ranges from about 2,000 revolutions per minute to about 4,000 revolutions per minute.
Statement 3. The system of statement 1, wherein the first and second shafts are generally axially aligned; and
   wherein the rotational speed of the first and second shafts ranges from about 2,000 revolutions per minute to about 4,000 revolutions per minute.
Statement 4. The system of statement 1, wherein the compressor comprises a centrifugal compressor configured so that the refrigerant is adapted to flow through the centrifugal compressor at a flow rate ranging from about 40,000 actual cubic feet per minute to about 70,000 actual cubic feet per minute; and
   wherein the centrifugal compressor is configured to pressurize the refrigerant so that the pressurized refrigerant is discharged from the centrifugal compressor at a pressure ranging from about 30 pounds per square inch absolute to about 300 pounds per square inch absolute.
Statement 5. The system of statement 1, wherein the low speed power turbine comprises at least six expansion stages for driving the second shaft; and
   wherein the at least six expansion stages drives the second shaft so that the low speed power turbine has a power rating of less than about 55,000 horsepower.
Statement 6. The system of statement 1, wherein the aeroderivative gas turbine is coupled to the compressor as a modular unit; and
   wherein the low speed power turbine is coupled to the gas generator as a modular unit.
Statement 7. The system of statement 1, further comprising:
   a gas liquefaction system for converting at least a portion of a fluid from a gas state into
      a liquid state, the fluid in the gas state comprising natural gas, the fluid in the liquid state comprising liquefied natural gas, the gas liquefaction system comprising:
      one or more cooling stages comprising:
         the refrigerant; and
         a loop through which the refrigerant is adapted to circulate, the loop comprising:
            a heat exchanger for transferring heat out of the fluid and into the refrigerant;
            the compressor of the compressor system for pressurizing the refrigerant;
            a condenser for transferring heat out of the refrigerant; and an expansion element for expanding the refrigerant.
Statement 8. A method of compressing a refrigerant, the method comprising:
   providing a compressor having a first shaft;
   providing an aeroderivative gas turbine having a power turbine that includes a second
      shaft;
   directly coupling the second shaft of the power turbine to the first shaft of the
      compressor;
   circulating the refrigerant through the compressor; and
   pressurizing the refrigerant with the compressor, comprising:
      directly driving the compressor using the aeroderivative gas turbine, comprising:
         rotating the first shaft of the power turbine at a first rotational speed; and
         rotating the second shaft of the compressor at a second rotational speed;
         wherein the first and second rotational speeds are substantially equal.
Statement 9. The method of statement 8, further comprising:
   converting at least a portion of a fluid from a gas state into a liquid state, the fluid in the
      gas state comprising natural gas, the fluid in the liquid state comprising liquefied natural gas;
   wherein converting at least a portion of the fluid from the gas state into the liquid state comprises transferring heat from the fluid and into the refrigerant;
   wherein the compressor comprises a centrifugal compressor;
   wherein the power turbine is a low speed power turbine comprising at least six expansion stages;
   wherein circulating the refrigerant through the compressor comprises circulating the refrigerant through the compressor at a flow rate ranging from about 40,000 actual cubic feet per minute to about 70,000 actual cubic feet per minute;

   wherein pressurizing the refrigerant with the compressor comprises pressurizing the refrigerant with the compressor so that the pressurized refrigerant is discharged from the compressor at a pressure ranging from about 30 pounds per square inch absolute to about 300 pounds per square inch absolute; wherein rotating the first shaft of the power turbine at the first rotational speed comprises driving the first shaft using the at least six expansion stages so that the low speed power turbine has a power rating of less than about 55,000 horsepower;
   wherein the first and second shafts are generally axially aligned; and
   wherein each of the first and second rotational speeds ranges from about 2,000 revolutions per minute to about 4,000 revolutions per minute.
Statement 10. The method of statement 8, further comprising:
   converting at least a portion of a fluid from a gas state into a liquid state, the fluid in the
      gas state comprising natural gas, the fluid in the liquid state comprising liquefied natural gas;
   wherein converting at least a portion of the fluid from the gas state into the liquid state comprises transferring heat from the fluid and into the refrigerant.
Statement 11. The method of statement 8, wherein the compressor comprises a centrifugal compressor;
   wherein circulating the refrigerant through the compressor comprises circulating the refrigerant through the compressor at a flow rate ranging from about 40,000 actual cubic feet per minute to about 70,000 actual cubic feet per minute; and
   wherein pressurizing the refrigerant with the compressor comprises pressurizing the refrigerant with the compressor so that the pressurized refrigerant is discharged from the compressor at a pressure ranging from about 30 pounds per square inch absolute to about 300 pounds per square inch absolute.
Statement 12. The method of statement 8, wherein the power turbine is a low speed power turbine comprising at least six expansion stages; and
   wherein rotating the first shaft of the power turbine at the first rotational speed comprises driving the first shaft using the at least six expansion stages so that the low speed power turbine has a power rating of less than about 55,000 horsepower.
Statement 13. The method of statement 8, further comprising:
   decoupling the aeroderivative gas turbine from the compressor as a modular unit;
   performing maintenance on at least the aeroderivative gas turbine; and
   re-coupling the aeroderivative gas turbine to the compressor as a modular unit.
Statement 14. The method of statement 13, wherein decoupling the aeroderivative gas turbine from the compressor as a modular unit comprises decoupling the first shaft of the power turbine from the second shaft of the compressor; and
   wherein re-coupling the aeroderivative gas turbine to the compressor as a modular unit comprises re-coupling the first shaft of the power turbine to the second shaft of the compressor.
Statement 15. The method of statement 8, wherein the first and second shafts are generally axially aligned; and
   wherein each of the first and second rotational speeds ranges from about 2,000 revolutions per minute to about 4,000 revolutions per minute.
Statement 16. A method of performing maintenance on a gas liquefaction system, the method comprising:
   providing the gas liquefaction system comprising a compressor and an aeroderivative
      gas turbine coupled thereto, the aeroderivative gas turbine comprising a gas generator and a power turbine coupled thereto;
   decoupling the aeroderivative gas turbine from a remainder of the gas liquefaction
      system as a modular unit;
   performing maintenance on at least the aeroderivative gas turbine; and
   re-coupling the aeroderivative gas turbine to the remainder of the gas liquefaction
      system as a modular unit after decoupling the aeroderivative gas turbine from the remainder of the gas liquefaction system as a modular unit.
Statement 17. The method of statement 16, wherein the aeroderivative gas turbine comprises an inlet for receiving air into the gas generator;
   wherein the power turbine comprises:
   an exhaust for discharging gas from the power turbine, wherein the exhaust is
      fluidicly coupled to the inlet when the aeroderivative gas turbine is in the form of the modular unit, and
   a first shaft;
   wherein the compressor comprises a second shaft directly coupled to the first shaft of the power turbine when the aeroderivative gas turbine is coupled to the compressor; and wherein decoupling the aeroderivative gas turbine from the remainder of the gas liquefaction system as a modular unit comprises:
   decoupling the inlet of the gas generator from means via which the air is adapted to be directed to the gas generator;
   decoupling the exhaust of the power turbine from means via which the gas is adapted to be directed away from the power turbine; and
   decoupling the first shaft from the second shaft.
Statement 18. The method of statement 17, wherein re-coupling the aeroderivative gas turbine to the remainder of the gas liquefaction system as a modular unit comprises:
   re-coupling the inlet of the gas generator to the means via which the air is adapted to be directed to the gas generator;
   re-coupling the exhaust of the power turbine to the means via which the gas is adapted to be directed away from the power turbine; and
   re-coupling the first shaft to the second shaft.
Statement 19. The method of statement 18, further comprising:
   converting at least a portion of a fluid from a gas state into a liquid state, the fluid in the
      gas state comprising natural gas, the fluid in the liquid state comprising liquefied natural gas;
   wherein converting at least a portion of the fluid from the gas state to the liquid state comprises:
   subjecting the fluid to one or more cooling stages, comprising:
      receiving fluid into a heat exchanger fluidicly coupled to the compressor;
      removing heat from the fluid using the heat exchanger; and
      discharging the fluid from the heat exchanger;
   and
   wherein removing heat from the fluid using the heat exchanger comprises:
   circulating a refrigerant through a loop, the loop comprising the heat exchanger
      and the compressor; and
   transferring heat from the fluid and to the refrigerant during circulating the refrigerant through the loop, comprising:
      transferring heat from the fluid and to the refrigerant using the heat exchanger; and
      pressurizing the refrigerant with the compressor, comprising: directly driving the compressor using the aeroderivative gas turbine, comprising:
         rotating the first shaft of the power turbine at a first rotational speed; and
         rotating the second shaft of the compressor at a second rotational speed;
         wherein the first and second rotational speeds are substantially equal.
Statement 20. The method of statement 16, further comprising:
   coupling a spare aeroderivative gas turbine to the remainder of the gas liquefaction system as a modular unit;
   operating the gas liquefaction system with the spare aeroderivative gas turbine; and decoupling the spare aeroderivative gas turbine from the remainder of the gas liquefaction system as a modular unit.

The foregoing has outlined features of several embodiments so that those skilled in the art may better understand the detailed description that follows. Those skilled in the art should appreciate that they may readily use the present disclosure as a basis for designing or modifying other processes and structures for carrying out the same purposes and/or achieving the same advantages of the embodiments introduced herein. Those skilled in the art should also realize that such equivalent constructions do not depart from the spirit and scope of the present disclosure, and that they may make various changes, substitutions and alterations herein without departing from the spirit and scope of the present disclosure.

## Claims

1. A method of performing maintenance on a gas liquefaction system, the method comprising:
providing the gas liquefaction system comprising a compressor and an aeroderivative
gas turbine coupled thereto, the aeroderivative gas turbine comprising a gas generator and a power turbine coupled thereto;
decoupling the aeroderivative gas turbine from a remainder of the gas liquefaction
system as a modular unit;
performing maintenance on at least the aeroderivative gas turbine; and
re-coupling the aeroderivative gas turbine to the remainder of the gas liquefaction
system as a modular unit after decoupling the aeroderivative gas turbine from the remainder of the gas liquefaction system as a modular unit.

2. The method of claim 1, wherein the aeroderivative gas turbine comprises an inlet for receiving air into the gas generator;
wherein the power turbine comprises:
an exhaust for discharging gas from the power turbine, wherein the exhaust is
fluidicly coupled to the inlet when the aeroderivative gas turbine is in the form of the modular unit, and
a first shaft;
wherein the compressor comprises a second shaft directly coupled to the first shaft of
the power turbine when the aeroderivative gas turbine is coupied to the compressor; and
wherein decoupling the aeroderivative gas turbine from the remainder of the gas
liquefaction system as a modular unit comprises:
decoupling the inlet of the gas generator from means via which the air is adapted
to be directed to the gas generator;
decoupling the exhaust of the power turbine from means via which the gas is
adapted to be directed away from the power turbine; and decoupling the first shaft from the second shaft.

3. The method of claim 2; wherein re-coupling the aeroderivative gas turbine to the remainder of the gas liquefaction system as a modular unit comprises:
re-coupling the inlet of the gas generator to the means via which the air is adapted to be
directed to the gas generator;
re-coupling the exhaust of the power turbine to the means via which the gas is adapted
to be directed away from the power turbine; and
re-coupling the first shaft to the second shaft.

4. The method of claim 3, further comprising:
converting at least a portion of a fluid from a gas state into a liquid state, the fluid in the
gas state comprising natural gas, the fluid in the liquid state comprising liquefied natural gas;
wherein converting at least a portion of the fluid from the gas state to the liquid state
comprises:
subjecting the fluid to one or more cooling stages, comprising:
receiving fluid into a heat exchanger fluidicly coupled to the compressor;
removing heat from the fluid using the heat exchanger; and
discharging the fluid from the heat exchanger;
and
wherein removing heat from the fluid using the heat exchanger comprises:
circulating a refrigerant through a loop, the loop comprising the heat exchanger
and the compressor; and
transferring heat from the fluid and to the refrigerant during circulating the
refrigerant through the loop, comprising:
transferring heat from the fluid and to the refrigerant using the heat exchanger; and
pressurizing the refrigerant with the compressor, comprising:
directly driving the compressor using the aeroderivative gas
turbine, comprising:
rotating the first shaft of the power turbine at a first
rotational speed; and
rotating the second shaft of the compressor at a second
rotational speed;
wherein the first and second rotational speeds are substantially equal.

5. The method of claim 1, further comprising:
coupling a spare aeroderivative gas turbine to the remainder of the gas liquefaction
system as a modular unit;
operating the gas liquefaction system with the spare aeroderivative gas turbine; and
decoupling the spare aeroderivative gas turbine from the remainder of the gas
liquefaction system as a modular unit.
